# FASCICULE DE BREVET EUROPEEN

(11) **EP 2 247 088 B1**
(45) Date de publication et mention de la délivrance du brevet: **21.11.2018**
(21) Numéro de dépôt: 10160514.5
(22) Date de dépôt: 20.04.2010
(51) Int. Cl.: H04M 7/00, H04L 12/26

(54) **Procédé de notification vocale d'un disfonctionnement dans une passerelle domestique, et passerelle domestique correspondante**
Sprachbenachrichtigungsverfahren über eine Störung in einer Zugangsschnittstelle im Privathaushalt, und entsprechende Zugangsschnittstelle im Privathaushalt
Method for voice notification of a malfunction in a home gateway and corresponding home gateway

(30) Priorité: 28.04.2009 FR 0952793
(43) Date de publication de la demande: 03.11.2010
(73) Titulaire: Orange, 75015 Paris (FR)
(72) Inventeur: Bouvet, Bertrand, 22700, PERROS-GUIREC (FR)

(56) Documents cités:
- JP-A- 5 161 183
- JP-A- 2000 165 551
- JP-A- 2004 147 062
- JP-A- 2004 364 205
- US-A1- 2004 263 340
- US-A1- 2007 168 725
- US-B1- 6 980 630

## Description

La présente invention se rapporte de manière générale au domaine des télécommunications, et plus précisément à l'assistance des utilisateurs de passerelles domestiques, lorsque ces passerelles ne fonctionnent plus correctement.

De nombreux équipements à destination résidentielle ou professionnelle voient le jour, tels les passerelles domestiques, et ces dernières sont généralement de plus en plus complexes car elles intègrent de nombreuses fonctionnalités. En effet les passerelles domestiques servent de point d'accès à un réseau de communication pour permettre à leurs utilisateurs de bénéficier de services tels que l'accès à Internet mais aussi la téléphonie sur IP (d'après l'anglais "Internet Protocol"), la télévision via Internet, etc. Ces équipements, bien qu'ayant un prix commercial relativement bas, ont un coût opérationnel très élevé pour les opérateurs, car la complexité grandissante de ces équipements, associée à l'effet de volume, à la complexité des réseaux de communication et à la diversité des réseaux d'accès, rendent les disfonctionnements de plus en plus nombreux et difficiles à résoudre. Ainsi un même utilisateur passe généralement plusieurs appels au service après-vente avant de résoudre un problème de fonctionnement sur sa passerelle domestique.

Plusieurs solutions ont été proposées pour diminuer le coût de service après-vente des passerelles domestiques:
Certaines passerelles intègrent chacune un logiciel embarqué traçant différents événements ou informations, mesurant des indicateurs de qualité de service, et capable d'envoyer ces informations à un serveur web dans le réseau de communication auquel sont connectées ces passerelles domestiques, soit régulièrement soit sur requête du serveur web. Cette solution, consistant à intégrer dans une passerelle domestique un logiciel embarqué pouvant communiquer avec un serveur distant, présente des avantages mais n'est pas utilisable en cas de non fonctionnement global de la passerelle domestique, et dans tous les cas dès que la connexion Internet de la passerelle domestique ne fonctionne plus.

D'autres logiciels de support client existent, qui permettent, lorsque l'utilisateur d'une passerelle domestique les installe sur un terminal connecté à cette passerelle domestique, de visualiser des indicateurs sur l'écran de son terminal, ces indicateurs permettant d'alerter l'utilisateur sur des disfonctionnements de la passerelle domestique. Ces indicateurs sont par exemple ceux normalisés par le Forum DSL (d'après l'anglais "Digital Suscriber Line Forum") dans la spécification TR098, et sont récupérés sur le terminal de l'utilisateur par le biais d'une connexion http (d'après l'anglais "Hyper Text Transport Protocol") à une page web locale de la passerelle domestique, ou encore par le biais d'une API (d'après l'anglais "Application Programming Interface"). Ces logiciels de support présentent l'inconvénient de nécessiter par l'utilisateur, une installation de ces logiciels sur un terminal connecté à la passerelle domestique. Or la plupart des utilisateurs n'installent pas ces logiciels, fournis avec leurs passerelles domestiques. Il est d'ailleurs à noter que ces logiciels ne sont pas utilisables par un utilisateur n'ayant pas de terminal adapté connecté à sa passerelle domestique, par exemple s'il n'y a connecté qu'un téléphone sur IP et une télévision. Certains de ces logiciels nécessitent de plus, lorsqu'ils accèdent à une page web locale d'une passerelle domestique, la saisie d'un mot de passe et d'un login, ce qui est contraignant pour l'utilisateur. Enfin les indicateurs fournis par ces logiciels ne sont généralement pas suffisants pour aider le service après-vente. En effet par exemple ils fourniront à l'utilisateur d'une passerelle domestique connectée à un réseau de communication, et donc au service après-vente appelé par l'utilisateur, l'information que le circuit virtuel conversationnel est non opérationnel pour la voix sur IP, mais sans information complémentaire pour déceler la cause de ce problème, qui peut être diverse. Cette cause est par exemple une ligne bruitée, ou la panne d'un routeur dédié à la voix sur IP dans le réseau de communication, ou encore la panne d'un serveur DHCP (d'après l'anglais "Dynamic Host Configuration Protocol") dans le réseau de communication.

Il est à noter que de plus, certaines des informations fournies par la passerelle domestique d'un utilisateur ne sont pas fiables. En effet par exemple, la passerelle domestique peut indiquer que sa connexion à Internet est en service car une adresse IP lui aura été attribuée via un serveur DHCP dans le réseau de communication auquel la passerelle domestique est connectée, alors qu'en réalité cette connexion ne fonctionne plus du fait d'un problème réseau. En effet, le renouvellement de cette adresse IP par le serveur DHCP pouvant avoir lieu à des périodes plus ou moins longues, par exemple toutes les douze heures, la passerelle domestique n'est pas en mesure de détecter immédiatement certains problèmes de connexion. Ainsi il est généralement utile pour résoudre les problèmes remontés par les clients au service après-vente, de corréler des informations sur les équipements réseaux impliqués dans les services fournis aux passerelles domestiques, aux informations remontées par ces dernières. Cependant lorsque ces services sont fournis par des opérateurs différents de ceux gérant les réseaux d'accès ou de collecte de leurs clients, ces informations sur les équipements réseaux ne sont pas toujours disponibles. Enfin seule la passerelle domestique est en mesure de fournir certaines informations, notamment celles concernant le réseau LAN (d'après l'anglais "Local Area Network") domestique qu'elle gère notamment grâce à un serveur DHCP local qu'elle intègre, et celles concernant ses différents processus logiciels fonctionnant en parallèle.

Ces solutions existantes pour diminuer le coût de service après-vente des passerelles domestiques sont donc contraignantes pour un utilisateur d'une passerelle domestique, et pas toujours efficaces pour guider un agent du service après-vente appelé en complément par l'utilisateur, dans la résolution d'un disfonctionnement de cette passerelle domestique.

Enfin il a été noté par l'inventeur que si tous les utilisateurs de passerelles domestiques redémarraient leurs passerelles avant d'appeler le service après-vente, le coût de celui-ci serait moindre, étant donné que les agents du service après-vente demandent systématiquement aux utilisateurs d'effectuer ce redémarrage si cela n'a pas déjà été fait.

JP 2004 147062 A fait partie de l'art antérieur et décrit une méthode permettant à un utilisateur d'être informé d'un changement de réseau d'accès en cours de communication lorsque le réseau d'accès utilisé devient inaccessible. Un message vocal est alors diffusé à l'utilisateur afin de l'informer du changement de réseaux.

JP 5 161183 A décrit une méthode de notification d'un dysfonctionnement détecté sur un équipement en émettant un appel automatique vers un correspondant distant déterminé en fonction d'un code associé au dysfonctionnement détecté et en diffusant au correspondant distant un message vocal relatif au code.

US 2007/168725 A1 décrit une méthode de redémarrage automatique d'un ordinateur lorsqu'une erreur critique du système se produit.

JP 2004 364205 A décrit une méthode de support au service d'une photocopieuse. Lorsqu'un dysfonctionnement est détecté sur la photocopieuse, une connexion automatique est établie avec le centre de support pour qu'une personne du centre de support et un utilisateur de la photocopieuse puissent communiquer.

Un des buts de l'invention est de remédier à au moins une partie des inconvénients de la technique antérieure en fournissant un procédé de notification vocale du non fonctionnement d'un service délivré par une passerelle domestique selon la revendication 1, une passerelle domestique selon la revendication 5, et un programme selon la revendication 7, qui permettent de fournir à un utilisateur de cette passerelle domestique une indication précise sur le ou les disfonctionnements liés à cette panne, sans installation préalable de logiciel sur un terminal.

Seuls les modes de réalisation couverts par les revendications font partie de l'invention.

A cette fin, l'invention propose un procédé de notification d'une panne de fonctionnement d'un service délivré par une passerelle domestique à laquelle est connecté un terminal téléphonique, ledit procédé étant caractérisé en ce qu'il comporte:
- une étape de détection d'un disfonctionnement au niveau d'un automate de ladite passerelle domestique, et d'obtention d'un code d'erreur lié audit disfonctionnement,
- une étape d'obtention d'un film vocal, utilisant ledit code d'erreur,
- et une étape de lecture dudit film vocal audit terminal téléphonique.

Grâce à l'invention, le temps d'appel d'un utilisateur de passerelle domestique au service après-vente est diminué du fait que cet utilisateur est en mesure de remonter une information précise au service après-vente sur le disfonctionnement à l'origine de son appel. En effet dans l'invention ce disfonctionnement étant détecté au niveau d'un automate de la passerelle domestique, le code d'erreur fourni à l'utilisateur est précis, puisque la passerelle gère un grand nombre d'automates, qui sont liés à la gestion de procédures réseau nécessaires à la connexion de la passerelle au réseau de communication, à l'enregistrement de la passerelle à différents équipements de services dans le réseau, etc. Cette information étant fournie vocalement à l'utilisateur sur son téléphone voix sur IP, cet utilisateur est en mesure de fournir une information précise sur ce disfonctionnement au service après-vente même s'il n'a pas installé de logiciel spécifique sur un ordinateur connecté à sa passerelle domestique, ou tout simplement même s'il n'a pas d'ordinateur. Enfin cette information est fournie à l'utilisateur même lorsque la connexion réseau de la passerelle domestique ne fonctionne pas, ce qui n'est pas possible avec certaines solutions existantes.

Selon une caractéristique avantageuse du procédé de notification selon l'invention, ladite étape de lecture est précédée d'une étape d'envoi d'un message audit terminal téléphonique, ledit message étant destiné à faire sonner ledit terminal téléphonique.

Selon cette caractéristique, un message étant envoyé par la passerelle domestique pour faire sonner le terminal téléphonique de l'utilisateur, celui-ci est averti d'un disfonctionnement dès la détection de ce disfonctionnement par la passerelle domestique, ce qui permet à l'utilisateur de remettre sa passerelle en service avant d'avoir besoin de s'en servir.

Il est à noter que dans le cas où la passerelle domestique ne fait pas sonner le terminal téléphonique de l'utilisateur, celui-ci sera averti de la panne de fonctionnement de la passerelle domestique lorsqu'il décrochera son terminal téléphonique à l'occasion par exemple d'un appel sortant. Cette variante d'implémentation de l'invention est également avantageuse puisqu'elle permet de ne pas engorger le service après-vente inutilement, par exemple lorsque la panne est due à un problème réseau qui est rétabli au bout d'une période de temps pendant laquelle l'utilisateur n'utilise pas sa passerelle domestique.

Selon une autre caractéristique avantageuse, ladite étape de détection d'un disfonctionnement et d'obtention d'un code d'erreur étant répétée pour plusieurs automates dans ladite passerelle domestique, ladite étape d'obtention d'un film vocal est précédée d'une étape d'agrégation des codes d'erreur générés par lesdits automates, et d'obtention d'un code d'erreur global significatif de ladite panne de fonctionnement.

Selon cette caractéristique, la passerelle ayant détecté un ensemble de disfonctionnements dans un intervalle de temps assez court, elle agrège ces disfonctionnements dans un code d'erreur global avant de lire ce code global à l'utilisateur. Une panne de fonctionnement dans la passerelle domestique générant en général plusieurs disfonctionnements au niveau des automates de la passerelle, l'agrégation de ces disfonctionnements en un code d'erreur global est plus adaptée pour aider un agent du service après-vente à résoudre la panne.

Selon une autre caractéristique avantageuse, ledit film vocal est obtenu en utilisant ledit code d'erreur global.

Le film vocal énonce par exemple le code d'erreur global, et/ou lui associe un énoncé fournissant un premier diagnostic de la panne de fonctionnement de la passerelle domestique, et/ou lui associe un conseil de résolution de cette panne. Ainsi la passerelle domestique avertit par exemple l'utilisateur, lorsque celui-ci décroche son téléphone, que la connexion Internet ne fonctionne plus, et lui conseille de redémarrer lui-même sa passerelle domestique, puis si cela ne rétablit pas la connexion, d'appeler le service après-vente en lui fournissant le code d'erreur "1246".

Selon une autre caractéristique avantageuse, ladite étape de lecture est suivie d'une étape de réception d'un code DTMF (d'après l'anglais "Dual-Tone Multi-Frequency"), et d'une étape de redémarrage automatique de ladite passerelle domestique.

Cette caractéristique permet à l'utilisateur de réparer lui-même une panne de fonctionnement de manière simple en lançant un redémarrage automatique de sa passerelle domestique, lorsque cela est adapté à la panne détectée par la passerelle, ce qui permet de diminuer encore les coûts de service après-vente.

Selon une autre caractéristique avantageuse, ladite étape de lecture est suivie d'une étape de réception d'un code DTMF, et d'une étape de connexion de ladite passerelle domestique à un serveur de test.

Cette caractéristique permet à l'utilisateur de connecter automatiquement sa passerelle domestique à un serveur vocal de test ou à un serveur web de test, ce qui permet à la passerelle d'obtenir des informations supplémentaires sur l'origine de la panne de fonctionnement, et facilitera encore plus la résolution de cette panne par l'utilisateur ou un agent du service après-vente.

Selon une autre caractéristique avantageuse, ladite étape de lecture est suivie d'une étape de réception d'un code DTMF, et d'une étape d'établissement d'appel automatique vers un numéro prédéterminé.

Cette étape d'établissement d'appel automatique vers un numéro de service après-vente par exemple, permet à l'utilisateur de ne pas avoir à rechercher ce numéro avant d'appeler un tel service. De plus, ce numéro de service après-vente est par exemple déterminé par la passerelle domestique en fonction d'un code d'erreur lié à un disfonctionnement détecté précédemment, ou d'un code d'erreur global déterminé par la passerelle domestique, afin de mettre l'utilisateur d'emblée en contact avec le personnel le plus adapté à résoudre son problème.

L'invention concerne aussi une passerelle domestique connectée d'une part à un terminal téléphonique et d'autre part à un réseau de communication, ladite passerelle comportant des automates de supervision de briques logicielles et de gestion de procédures protocolaires entre ladite passerelle domestique et ledit réseau de communication, et ladite passerelle étant caractérisée en ce qu'elle comporte:
- des moyens de détection d'un disfonctionnement dans chacun desdits automates, comportant des moyens de génération d'un code d'erreur lié audit disfonctionnement,
- des moyens d'obtention d'un film vocal, utilisant au moins un code d'erreur généré par lesdits moyens de détection,
- et des moyens de lecture dudit film vocal audit terminal téléphonique.

Par exemple, lesdits moyens de détection génèrent un code d'erreur sur détection d'un blocage d'une des branches dudit automate pendant une durée supérieure à un seuil prédéterminé, ou sur détection de la réception par ledit automate d'un message significatif d'un disfonctionnement dans ledit réseau de communication.

L'invention concerne encore un programme d'ordinateur comportant des instructions pour mettre en oeuvre le procédé de notification selon l'invention, lorsqu'il est exécuté sur un processeur.

La passerelle domestique selon l'invention, ainsi que le programme d'ordinateur, présentent des avantages analogues à ceux du procédé de notification selon l'invention.

D'autres caractéristiques et avantages apparaîtront à la lecture d'un mode de réalisation préféré décrit en référence aux figures dans lesquelles :
- la figure 1 représente une passerelle domestique connectée à divers terminaux et à des réseaux de communication, et dans laquelle est utilisé le procédé de notification selon l'invention,
- la figure 2 représente une passerelle domestique selon l'invention,
- la figure 3 représente un automate DHCP de la passerelle domestique selon l'invention,
- et la figure 4 représente des étapes du procédé de notification selon l'invention, dans ce mode de réalisation de l'invention.

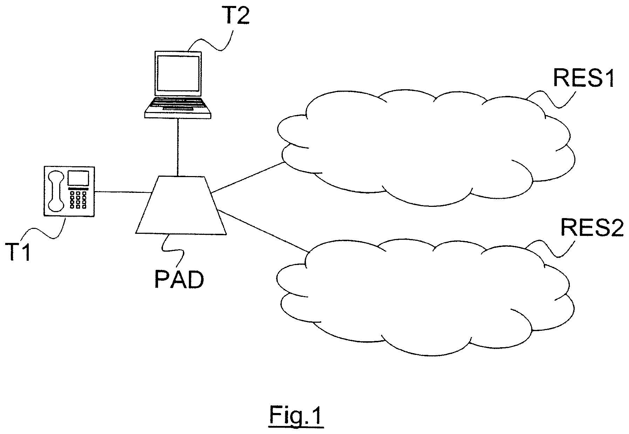

Selon un mode préféré de réalisation de l'invention, le procédé de notification selon l'invention est implémenté au moins en partie de manière logicielle dans une passerelle domestique PAD représentée à la **figure 1****.** Cette passerelle domestique PAD est connectée d'une part à un téléphone T1 et à un ordinateur personnel T2, et d'autre part à deux réseaux de communications RES1 et RES2 par le biais d'une connexion ADSL (d'après l'anglais "Asynchronous Digital Subscriber Line"):
- le réseau de communication RES1 est un réseau de communication voix sur IP utilisant une architecture IMS (d'après l'anglais "IP Multimedia Subsystem" du groupe de normalisation 3GPP pour l'anglais "3rd Generation Partnership Project"),
- et le réseau de communication RES2 est le réseau Internet.

Il est à noter que pour simplifier, les équipements de ces réseaux ne sont pas représentés sur la **figure 1****.** En particulier, l'architecture d'accès de la passerelle domestique PAD aux réseaux RES1 et RES2 par la boucle locale du Réseau Téléphonique Commuté (RTC) n'est pas représentée. De plus, l'invention est également implémentable dans des passerelles domestiques connectées à d'autres types de terminaux et de réseaux: par exemple en variante, si la passerelle domestique est seulement reliée à un téléphone traditionnel, ne permettant que des appels voix, elle est seulement connectée au réseau RTC et au réseau RES1.

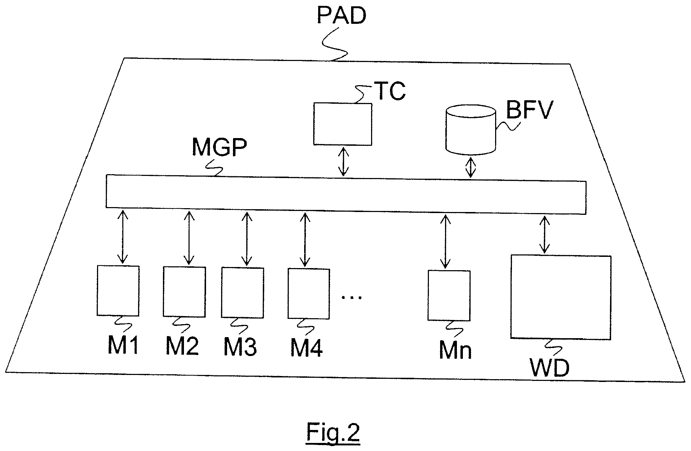

La passerelle domestique PAD comporte, en plus de modules matériels et/ou logiciels de gestion d'interfaces, tels qu'un module de gestion d'interface analogique FXS (d'après l'anglais "Foreign eXchange Subscriber") pour communiquer avec le terminal T1, et un module de gestion d'interface réseau ADSL pour communiquer avec les réseaux RES1 et RES2, différents modules logiciels et/ou matériels représentés à la **figure 2** et décrits ci-dessous.

Les modules M1, M2, M3, M4 à Mn, sont des modules de gestion de procédures protocolaires nécessaires à la connexion de la passerelle domestique PAD aux réseaux RES1 et RES2, et à l'enregistrement de la passerelle PAD auprès de différentes plates-formes de service dans ces réseaux. Ainsi,
∘ le module M1 comporte des automates de gestion de la connexion PPPoE (d'après l'anglais "Point-to-Point Protocol over Ethernet") entre la passerelle domestique PAD et un serveur BAS (d'après l'anglais "Broadband Access Server") d'accès au réseau RES2,
∘ le module M2 comporte des automates de gestion du protocole NTP (d'après l'anglais "Network Time Protocol") avec un serveur NTS (d'après l'anglais "Network Time Server") pour la mise à l'heure de la passerelle domestique PAD et des terminaux qui y sont raccordés,
∘ le module M3 comporte des automates de résolution de noms de domaines ou FQDN (d'après l'anglais "Fully Qualified Domain Name") avec un serveur DNS (d'après l'anglais "Domain Name Server"),
∘ le module M4 comporte des automates de gestion du protocole FTP (d'après l'anglais "File Transport Protocol") pour accéder à différents serveurs de téléchargement de configuration nécessaires au service voix sur IP,
∘ et le module Mn comporte des automates de gestion du protocole DHCP pour fournir une adresse IP à la passerelle domestique PAD, une adresse IP d'un serveur SBC (d'après l'anglais "Session Border Controller"), point d'entrée du point de vue de la passerelle domestique PAD dans le réseau RES1, ainsi que des tables de routes statiques permettant à la passerelle domestique PAD de router ses paquets IP en émission soit sur un circuit virtuel conversationnel vers le réseau RES1, soit sur un circuit virtuel de données vers le réseau RES2.

A des fins de clarté, les autres modules comportant des automates dans la passerelle domestique PAD, permettant notamment l'enregistrement SIP (d'après l'anglais "Session Initiation Protocol") dans le réseau RES1, et la gestion d'autres procédures protocolaires, ne sont pas représentés sur la **figure 2**.

Le module WD est un automate de supervision d'une brique logicielle implémentant les procédures SIP nécessaires à la voix sur IP. Ce module redémarre automatiquement la brique logicielle lorsque celle-ci ne fonctionne plus correctement.

Le module MGP est un module de gestion des modules M1 à Mn et WD. Notamment, le module de gestion MGP implémente une surcouche logicielle pilotant ces modules: au démarrage de la passerelle domestique, il lance d'abord le module M1 pour établir une session Internet PPPoE avec le serveur BAS, puis résout les noms de domaine nécessaires à l'obtention d'adresses IP pour la mise à jour de la configuration de la passerelle en utilisant le module M3 ainsi que d'autres modules, etc.

Selon l'invention, le module de gestion MGP détecte également un ou plusieurs disfonctionnements au niveau des automates implémentés par les modules M1 à Mn et WD. Pour cela, les différentes branches des automates correspondant à des boucles d'attente ou à des erreurs sont implémentées de telle manière qu'un message d'erreur est envoyé au module de gestion MGP dès qu'un disfonctionnement est détecté. Ce message comporte un code correspondant au disfonctionnement détecté. Par exemple dès qu'un automate reçoit un message d'erreur, par exemple un message d'erreur "SIP 408 Request Timeout", d'un des réseaux auquel est connectée la passerelle domestique PAD, un message comportant un code correspondant à cette erreur est remonté au module de gestion MGP. De même lorsqu'un automate est bloqué sur une de ses branches pendant une durée supérieure à un seuil prédéterminé, un message comportant un code correspondant à cette erreur est remonté au module de gestion MGP.

En variante, lorsqu'un automate de la passerelle reçoit un message d'erreur en provenance d'un des réseaux auquel est connectée la passerelle domestique PAD, ou lorsqu'une des branches de cet automate reboucle sur elle-même pendant une durée supérieure à un seuil prédéterminé, l'automate modifie une variable consultable par le module de gestion MGP et dont la valeur ainsi modifiée correspond à un disfonctionnement détecté. Ainsi dans cette variante les automates de la passerelle n'envoient pas de messages au module de gestion MGP, mais le module de gestion MGP lit périodiquement toutes les variables correspondant à des disfonctionnements possibles dans ses automates pour détecter de tels disfonctionnements.

Enfin la passerelle domestique PAD comporte une table TC de correspondance entre un code d'erreur correspondant à un ou plusieurs disfonctionnements détectés dans un ou plusieurs automates de la passerelle PAD, et un identifiant de film vocal, chacun des films vocaux référencés dans cette table de correspondance TC étant stockés dans une base BFV de films vocaux. Cette table TC de correspondance, ainsi que la base BFV de films vocaux, qui est interne à la passerelle domestique PAD, sont accessibles par le module de gestion MGP.

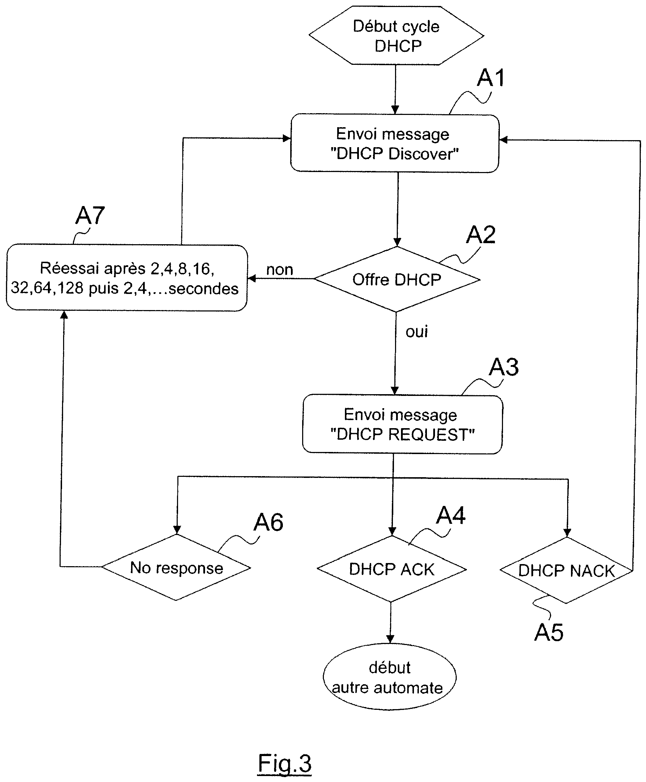

On décrit maintenant, à titre d'exemple, un des automates du module Mn de la passerelle domestique PAD, en relation avec la **figure 3**. Cet automate gère l'attachement DHCP de la passerelle domestique PAD. D'autres automates DHCP sont implémentés dans le module Mn, notamment:
- un automate de renouvellement de bail DHCP, qui reboucle sur l'automate d'attachement DHCP lorsqu'il ne parvient pas à renouveler ce bail,
- et un automate effectuant un test DHCP lorsque les requêtes SIP de la passerelle domestique n'ont pas de réponse, cet automate rebouclant lui aussi sur l'automate d'attachement DHCP lorsqu'il ne reçoit pas de message "DHCP ACK" même après plusieurs envois de messages "DHCP Request".

L'automate d'attachement DHCP comporte des étapes A1, A3 et A7, et des conditions A2, A6, A4 et A5:
Lors du lancement de l'automate d'attachement DHCP, celui-ci envoie un message "DHCP Discover" à un serveur DHCP du réseau RES1 selon une première étape A1.

Suite à cette étape A1, si la passerelle domestique PAD reçoit une offre DHCP, ce qui correspond à la condition A2, alors l'automate d'attachement DHCP envoie un message "DHCP Request" au serveur DHCP, selon l'étape A3. Sinon, c'est-à-dire si la passerelle domestique PAD ne reçoit pas d'offre DHCP, l'automate d'attachement DHCP passe à l'étape A7, décrite plus loin.

Lorsque l'automate d'attachement DHCP a envoyé un message "DHCP Request" au serveur DHCP à l'étape A3, trois suites sont possibles:
- si l'automate d'attachement DHCP reçoit un message "DHCP ACK", ce qui correspond à la condition A4, alors l'attachement DHCP s'est correctement déroulé et un autre automate est lancé, par exemple pour déclarer la passerelle domestique à un serveur http de présence et de mise à jour de fichiers de configuration VoIP (d'après l'anglais "Voice over IP"),
- ou si l'automate d'attachement DHCP ne reçoit pas de réponse, ce qui correspond à la condition A6, alors l'automate d'attachement DHCP passe à l'étape A7, décrite plus loin,
- ou si l'automate d'attachement DHCP reçoit un message "DHCP NACK", ce qui correspond à la condition A5, alors l'automate d'attachement DHCP incrémente un compteur, et retourne à l'étape A1.

L'étape A7 est l'attente d'un nombre de secondes prédéterminé avant de retourner à l'étape A1, c'est-à-dire pour retenter d'obtenir une offre DHCP en envoyant de nouveau un message "DHCP Discover". Ce nombre de secondes prédéterminé évolue à chaque passage. Au premier passage à l'étape A7, il est de deux secondes, puis au deuxième passage il est de 4 secondes, et est ainsi doublé à chaque nouveau passage jusqu'à atteindre 128 secondes. Au huitième passage ce nombre de secondes redescend à deux secondes, et est doublé de la même manière à chaque nouveau passage, et ainsi de suite. Lorsque l'automate d'attachement DHCP reboucle sur l'étape A7 un nombre de fois prédéterminé ou pendant une durée supérieure à un seuil déterminé, par exemple six fois ou pendant 128 secondes, il envoie un message comportant un code d'erreur associé à ce disfonctionnement au module de gestion MGP. Ce code d'erreur a une valeur numérique et/ou texte, par exemple "erreur 24: pas de réponse du serveur DHCP".

De même lorsque le compteur incrémenté par l'automate d'attachement DHCP lorsqu'il reçoit un message "DHCP NACK" atteint une certaine valeur, par exemple 4 parce qu'il a reçu quatre fois ce message d'erreur, l'automate d'attachement DHCP envoie un message comportant un code d'erreur associé au module de gestion MGP, par exemple "erreur 25: réponse systématique "DHCP NACK du serveur DHCP".

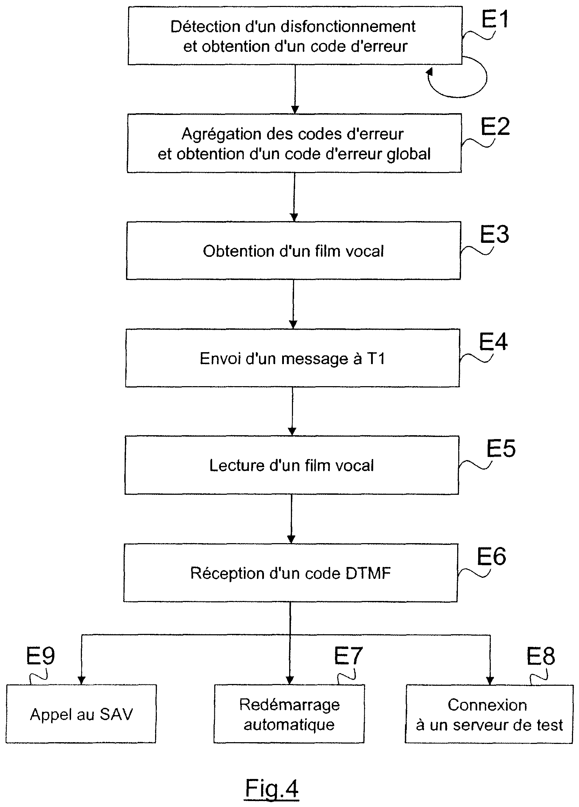

En référence à la **figure 4****,** le procédé de notification selon l'invention est maintenant représenté sous la forme d'un algorithme comportant des étapes E1 à E9. Il est implémenté sous forme logicielle dans le module MGP de gestion de la passerelle domestique.

L'étape E1 est la détection d'un disfonctionnement et l'obtention d'un code d'erreur associé à ce disfonctionnement. Cette détection a lieu par la lecture d'un message d'erreur reçu par le module de gestion MGP, message d'erreur qui lui a été envoyé par l'un des automates des modules M1 à Mn ou par l'automate WD. Le code d'erreur associé au disfonctionnement est également obtenu par la lecture de ce code dans ce message. Avant de passer à l'étape E2, le module de gestion MGP attend une durée prédéterminée, par exemple une minute. Cela lui permet de recevoir d'autres messages d'erreur des automates des modules M1 à Mn et WD, et d'obtenir plusieurs codes d'erreur qu'il pourra lier entre eux de manière à analyser la cause d'une panne de service de la passerelle domestique PAD, ou de remonter ces codes d'erreur sous forme d'un code d'erreur global à un tiers pour que celui-ci effectue cette analyse. L'étape E1 est donc répétée autant de fois que de messages d'erreur sont reçus pendant cette durée prédéterminée d'attente.

L'étape suivante E2 est, lorsque plusieurs codes d'erreur ont été obtenus lors d'étapes E1, l'agrégation de ces codes d'erreur en un code d'erreur global significatif d'une panne de fonctionnement d'un service de la passerelle domestique PAD. Cette agrégation est par exemple une concaténation des codes d'erreur obtenus aux étapes E1 précédentes, ou un code d'erreur global obtenu après analyse de ces codes d'erreur. Par exemple, lors de la phase d'enregistrement SIP via l'émission par la passerelle domestique PAD d'un message "SIP REGISTER", si celle-ci n'obtient pas de réponse au bout des 11 retransmissions en 32 secondes selon le RFC3261 (d'après l'anglais "Request For Comment", spécification de l'IETF ("Internet Engineering Task Force")), un code d'erreur est remonté par l'automate d'enregistrement SIP (408 Time Out) au module de gestion MGP. Le module MGP envoie alors vers le module Mn une demande d'envoi de requête "DHCP Renew" sur le réseau RES1. Si le serveur DHCP ne répond pas, un autre code d'erreur est remonté par le module Mn au module de gestion MGP. Celui-ci en déduit alors un code d'erreur global correspondant à une panne du circuit virtuel conversationnel, car la réunion des deux conditions "pas de réponse SIP et pas de réponse DHCP" est significative d'une telle panne.

L'étape E3 est l'obtention d'un film vocal en utilisant le code d'erreur obtenu à l'étape E1, si un seul message d'erreur a été reçu précédemment par le module de gestion MGP, ou sinon en utilisant le code d'erreur global obtenu à l'étape E2. Pour cela le module de gestion MGP consulte la table de correspondance TC. Cette table donne pour chaque code d'erreur qu'un automate de la passerelle domestique PAD a la possibilité d'envoyer dans un message au module de gestion MGP, et pour chaque code d'erreur global que le module de gestion MGP a la possibilité d'obtenir, un identifiant de film vocal correspondant à ce code d'erreur ou à ce code d'erreur global. Dans cette étape E3, le module de gestion MGP obtient donc un identifiant de film vocal correspondant à un code d'erreur obtenu à l'étape E1 ou à un code d'erreur global obtenu à l'étape E2. Puis le module de gestion MGP télécharge le film vocal correspondant à cet identifiant, dans la base de données BFV de film vocaux.

En variante de cette étape E3, le module de gestion MGP obtient un film vocal en synthétisant vocalement le code d'erreur ou le code d'erreur global obtenu précédemment, ainsi qu'éventuellement un message texte par défaut. Dans une autre variante, ce film vocal est obtenu par concaténation d'un film vocal stocké dans la base de données BFV et d'un film vocal obtenu par synthèse vocale, en utilisant le code d'erreur ou le code d'erreur global obtenu précédemment. De plus, en variante dans cette étape E3, le module de gestion MGP sélectionne ce film vocal parmi plusieurs films vocaux de contenu identique mais utilisant des langues différentes dans la base de films vocaux BFV. Le choix du film vocal à utiliser par le module de gestion MGP s'effectue par exemple en fonction d'un fichier de configuration téléchargé par la passerelle domestique PAD ou d'un identifiant de circuit virtuel détecté lors du démarrage de la passerelle domestique PAD, ce fichier ou cet identifiant permettant de déduire le pays de connexion de la passerelle domestique PAD, et donc une langue de diffusion correspondante.

L'étape E4 est l'envoi d'un message au téléphone T1, ce message étant destiné à faire sonner le téléphone T1. Il s'agit ici d'un message au format V23 (protocole défini par le CCITT ("Comité Consultatif International du Télégraphe et Téléphone")). D'autres messages sont bien sûr utilisables en fonction de l'interface entre la passerelle domestique PAD et le téléphone T1. Par exemple si en variante le téléphone T1 est un téléphone voix sur IP et non un téléphone traditionnel, ce message est un message "SIP Invite". De plus, en fonction de la configuration du téléphone, ce message d'alerte fait sonner le téléphone, ou le fait vibrer, et/ou affiche un appel entrant sur un écran du téléphone.

On suppose maintenant qu'un utilisateur décroche le téléphone T1.

L'étape suivante E5 est alors la lecture du film vocal obtenu à l'étape E3, sur l'interface FXS entre la passerelle domestique PAD et le téléphone T1. Ce film vocal énonce le code d'erreur ou le code d'erreur global associé à une panne de fonctionnement de la passerelle domestique PAD, et conseille l'utilisateur du téléphone T1. Son contenu est par exemple:
- "Votre connexion à Internet ne fonctionne plus. Notez le code d'erreur 1234. Pour identifier plus précisément la panne, appuyez sur la touche "6" de votre téléphone afin de connecter votre passerelle domestique à un serveur de test, attendez le deuxième code d'erreur et appuyez sur la touche "7" de votre téléphone pour contacter le service après-vente, en leur communiquant ces deux codes d'erreur."
- ou "Votre connexion à Internet ne fonctionne plus. Notez le code d'erreur 1246. Appuyez sur la touche "5" de votre téléphone pour rebooter votre passerelle domestique. Si le problème persiste après reboot, appuyez sur la touche "7" de votre téléphone pour contacter le service après-vente, en leur communiquant ce code d'erreur."
- ou "Le réseau Internet ou votre passerelle domestique sont momentanément indisponibles. Notez le code d'erreur 1238. Appuyez sur la touche "5" de votre téléphone pour rebooter votre passerelle domestique et patientez."
- ou "Veuillez connecter votre ligne à l'accès. Notez le code d'erreur 1111. Si cela est déjà fait alors votre ligne ADSL est en panne, appuyez sur la touche "7" de votre téléphone pour contacter le service après-vente, en leur communiquant ce code d'erreur."
- ou "Le service voix sur IP ne fonctionne plus. Notez le code d'erreur 2242. Assurez-vous que votre passerelle domestique n'est pas utilisée pour accéder aux autres services télévision et Internet, puis rebootez en appuyant sur la touche "5" de votre téléphone. Si le problème persiste après reboot, appuyez sur la touche "7" de votre téléphone pour contacter le service après-vente, en leur communiquant ce code d'erreur."

On suppose maintenant que le film vocal lu à l'étape E5 conseillait à l'utilisateur d'effectuer une action en appuyant sur une des touches de son téléphone T1, et que l'utilisateur du téléphone T1 suit ce conseil en appuyant sur cette touche.

L'étape E6 est alors la réception par le module de gestion MGP, d'un code DTMF correspondant à cette touche. Si ce code correspond à la touche 5, alors l'étape suivante est l'étape E7, s'il correspond à la touche 6 alors l'étape suivante est l'étape E8, et s'il correspond à la touche 7 alors l'étape suivante est l'étape E9.

L'étape E7 est le redémarrage automatique de la passerelle domestique PAD. Lors de ce redémarrage automatique, tous les processus de la passerelle domestique PAD sont relancés comme s'il s'agissait d'un reboot manuel de la passerelle domestique PAD.

L'étape E8 est la connexion de la passerelle domestique PAD à un serveur de test. Suivant le type de panne relevé par le module de gestion MGP, c'est-à-dire suivant le code d'erreur ou le code d'erreur global obtenu par ce module, le serveur de test est par exemple un serveur vocal de test dans le réseau RTC, ou un serveur web de test.

Le serveur vocal de test sert à la passerelle domestique PAD à tester sa connexion téléphonique. Pour cela, le module de gestion MGP a un applicatif de test de connexion téléphonique qui lance un appel sortant depuis la passerelle domestique PAD vers ce serveur vocal de test. Dans le cas où cet appel aboutit, la passerelle domestique PAD fournit un nouveau code d'erreur à l'utilisateur du téléphone T1, afin qu'il puisse le transmettre à un agent du service après-vente. Ce nouveau code d'erreur permet de préciser la panne de fonctionnement détectée par la passerelle domestique PAD, en indiquant si cette panne est liée à un problème de connexion téléphonique ou au contraire à un autre problème, tel qu'un problème d'enregistrement dans le réseau RES1.

Le serveur web de test sert à la passerelle domestique PAD à effectuer différents tests permettant d'affiner un problème de connexion Internet. Pour cela le module de gestion MGP a un applicatif de test permettant d'effectuer diverses opérations vers le serveur web de test, par exemple l'envoi d'une requête "ICMP (d'après l'anglais "Internet Control Message Protocol") Echo". Ce serveur web de test est situé dans un des réseaux de communication auxquels est connectée la passerelle domestique. Le module de gestion MGP envoie éventuellement le code d'erreur ou le code d'erreur global précédemment obtenu à l'étape E1 ou à l'étape E2 au serveur web de test, lorsqu'il parvient à s'y connecter. Ainsi le serveur web de test est en mesure d'effectuer lui-même diverses opérations de test et d'en fournir les résultats à la passerelle domestique PAD. En fonction des résultats de ces tests, la passerelle domestique PAD fournit un nouveau code d'erreur à l'utilisateur du téléphone T1, ce nouveau code étant significatif du problème de fonctionnement détecté par la passerelle domestique PAD.

L'étape E9 est un appel automatique de la passerelle domestique PAD au service après-vente. Pour cela, la passerelle domestique PAD établit une communication dans le réseau RES1 avec un agent du service après-vente, en utilisant une adresse SIP ou un numéro de téléphone préconfiguré dans la passerelle domestique PAD. Ce numéro de téléphone est par exemple choisi entre plusieurs numéros en fonction du code d'erreur ou du code d'erreur global obtenu à l'étape E1 ou à l'étape E2. Ainsi si le code d'erreur ou le code d'erreur global indique une panne liée au service de télévision sur IP, l'utilisateur sera mis en relation avec un service après-vente dédié à ce service, ou s'il indique une panne liée à l'accès à Internet, l'utilisateur sera mis en relation avec un service après-vente dédié au service Internet. Il est à noter que lorsque le code d'erreur ou le code d'erreur global indique une panne au niveau du service voix sur IP, la passerelle domestique PAD n'établit pas d'appel automatique mais invite plutôt l'utilisateur à joindre un numéro de service après-vente via un téléphone mobile par exemple.

Il est enfin à noter que l'ordre des étapes du procédé de notification selon l'invention n'est pas figé. En effet des variantes sont envisageables, dans lesquelles des étapes E1 sont effectuées en parallèle de l'étape E2 par exemple. De plus, si en variante à l'étape E3 le film vocal est obtenu par synthèse vocale, cette étape E3 est par exemple effectuée après l'étape E4, en même temps que l'étape E5 de lecture du film vocal, celui-ci étant lu au fur et à mesure de sa synthèse. Dans une autre variante, l'étape E4 n'est pas implémentée, l'étape E5 ayant lieu dès que l'utilisateur du téléphone T1 décroche le téléphone T1, par exemple parce qu'il souhaite effectuer un appel sortant. Enfin, en fonction des cas d'utilisation du procédé de notification selon l'invention, certaines étapes n'ont pas lieu ou sont effectuées différemment. Par exemple, si après l'étape E4, l'utilisateur ne décroche pas le téléphone T1, mais un répondeur raccordé au téléphone T1 prend l'appel local de la passerelle domestique PAD, les étapes E6 à E9 n'ont pas lieu. L'utilisateur aura simplement un message correspondant au film vocal enregistré sur son répondeur.

## Revendications

1. Procédé de notification d'une panne de fonctionnement d'un service délivré par une passerelle domestique (PAD) à laquelle est connecté un terminal téléphonique (T1), ledit procédé comportant:
- une étape (E1) de détection d'un disfonctionnement au niveau d'un automate (M1,..., Mn, WD) de ladite passerelle domestique (PAD), et d'obtention d'un code d'erreur lié audit disfonctionnement,
- une étape (E3) d'obtention d'un film vocal, utilisant ledit code d'erreur,
- et une étape (E5) de lecture dudit film vocal audit terminal téléphonique (T1), **caractérisé en ce que** l'étape de lecture étant suivie d'une étape (E6) de réception d'un code DTMF, et, en réponse à la réception du code DTMF, d'une étape (E9) d'établissement d'appel automatique vers un numéro de téléphone sélectionné en fonction du code d'erreur obtenu.

2. Procédé de notification selon la revendication 1, **caractérisé en ce que** ladite étape (E5) de lecture est précédée d'une étape (E4) d'envoi d'un message audit terminal téléphonique (T1), ledit message étant destiné à faire sonner ledit terminal téléphonique (T1).

3. Procédé de notification selon la revendication 1 ou 2, **caractérisé en ce que** ladite étape (E1) de détection d'un disfonctionnement et d'obtention d'un code d'erreur étant répétée pour plusieurs automates (M1,..., Mn, WD) dans ladite passerelle domestique, ladite étape (E3) d'obtention d'un film vocal est précédée d'une étape (E2) d'agrégation des codes d'erreur générés par lesdits automates (M1,..., Mn, WD), et d'obtention d'un code d'erreur global significatif de ladite panne de fonctionnement.

4. Procédé de notification selon la revendication 3, **caractérisé en ce que** ledit film vocal est obtenu en utilisant ledit code d'erreur global.

5. Passerelle domestique (PAD) connectée d'une part à un terminal téléphonique (T1) et d'autre part à un réseau de communication (RES1, RES2), ladite passerelle comportant des automates de supervision de briques logicielles (WD) et de gestion (M1, ..., Mn) de procédures protocolaires entre ladite passerelle domestique (PAD) et ledit réseau de communication (RES1, RES2), et ladite passerelle comportant:
- des moyens de détection d'un disfonctionnement dans chacun desdits automates (M1, ..., Mn, WD), comportant des moyens de génération d'un code d'erreur lié audit disfonctionnement,
- des moyens d'obtention d'un film vocal, utilisant au moins un code d'erreur généré par lesdits moyens de détection,
- des moyens de lecture dudit film vocal audit terminal téléphonique (T1), et ladite passerelle étant **caractérisée en ce qu'**elle comporte:
- des moyens de réception d'un code DTMF et d'établissement d'appel automatique, en réponse à la réception du code DTMF, vers un numéro de téléphone sélectionné en fonction du code d'erreur obtenu.

6. Passerelle domestique (PAD) selon la revendication 5, **caractérisée en ce que** lesdits moyens de détection génèrent un code d'erreur sur détection d'un blocage d'une des branches dudit automate pendant une durée supérieure à un seuil prédéterminé, ou sur détection de la réception par ledit automate d'un message significatif d'un disfonctionnement dans ledit réseau de communication (RES1, RES2).

7. Programme d'ordinateur comportant des instructions pour mettre en oeuvre le procédé selon l'une quelconque des revendications 1 à 4, lorsqu'il est exécuté sur un processeur.

## Patentansprüche

1. Benachrichtigungsverfahren über eine Betriebsstörung eines von einem Home-Gateway (PAD), mit dem ein Telefonendgerät (T1) verbunden ist, gelieferten Diensts, wobei das Verfahren aufweist:
- einen Schritt (E1) der Erfassung einer Funktionsstörung im Bereich eines Automaten (M1, ..., Mn, WD) des Home-Gateways (PAD), und des Erhalts eines mit der Funktionsstörung verbundenen Fehlercodes,
- einen Schritt (E3) des Erhalts eines Sprachfilms unter Verwendung des Fehlercodes,
- und einen Schritt (E5) des Lesens des Sprachfilms am Telefonendgerät (T1),
**dadurch gekennzeichnet, dass** auf den Leseschritt ein Schritt (E6) des Empfangs eines DTMF-Codes, und als Antwort auf den Empfang des DTMF-Codes ein Schritt (E9) des Aufbaus eines automatischen Anrufs einer Telefonnummer folgt, die abhängig vom erhaltenen Fehlercode ausgewählt wird.

2. Benachrichtigungsverfahren nach Anspruch 1, **dadurch gekennzeichnet, dass** vor dem Leseschritt (E5) ein Schritt (E4) des Sendens einer Nachricht an das Telefonendgerät (T1) liegt, wobei die Nachricht dazu bestimmt ist, das Telefonendgerät (T1) läuten zu lassen.

3. Benachrichtigungsverfahren nach Anspruch 1 oder 2, **dadurch gekennzeichnet, dass**, da der Schritt (E1) der Erfassung einer Funktionsstörung und des Erhalts eines Fehlercodes für mehrere Automaten (M1, ..., Mn, WD) im Home-Gateway wiederholt wird, vor dem Schritt (E3) des Erhalts eines Sprachfilms ein Schritt (E2) der Aggregation der von den Automaten (M1, ..., Mn, WD) erzeugten Fehlercodes und des Erhalts eines globalen Fehlercodes liegt, der für die Betriebsstörung bezeichnend ist.

4. Benachrichtigungsverfahren nach Anspruch 3, **dadurch gekennzeichnet, dass** der Sprachfilm unter Verwendung des globalen Fehlercodes erhalten wird.

5. Home-Gateway (PAD), das einerseits mit einem Telefonendgerät (T1) und andererseits mit einem Kommunikationsnetzwerk (RES1, RES2) verbunden ist, wobei das Gateway Automaten zur Überwachung von Software-Bausteinen (WD) und zur Verwaltung (M1, ..., Mn) von Protokollprozeduren zwischen dem Home-Gateway (PAD) und dem Kommunikationsnetzwerk (RES1, RES2) aufweist, und das Gateway aufweist:
- Einrichtungen zur Erfassung einer Funktionsstörung in jedem der Automaten (M1, ..., Mn, WD), die Einrichtungen zur Erzeugung eines mit der Funktionsstörung verbundenen Fehlercodes aufweisen,
- Einrichtungen zum Erhalt eines Sprachfilms, die mindestens einen durch die Erfassungseinrichtungen erzeugten Fehlercode verwenden,
- Einrichtungen zum Lesen des Sprachfilms am Telefonendgerät (T1),
und das Gateway **dadurch gekennzeichnet ist, dass** es aufweist:
- Einrichtungen zum Empfang eines DTMF-Codes und des automatischen Anrufaufbaus, als Antwort auf den Empfang des DTMF-Codes, einer abhängig vom erhaltenen Fehlercode ausgewählten Telefonnummer.

6. Home-Gateway (PAD) nach Anspruch 5, **dadurch gekennzeichnet, dass** die Erfassungseinrichtungen bei Erfassung einer Blockierung eines der Zweige des Automaten während einer Dauer länger als eine vorbestimmte Schwelle oder bei Erfassung des Empfangs einer Nachricht, die für eine Funktionsstörung im Kommunikationsnetzwerk (RES1, RES2) bezeichnend ist, durch den Automaten einen Fehlercode erzeugen.

7. Computerprogramm, das Anweisungen aufweist, um das Verfahren nach einem der Ansprüche 1 bis 4 durchzuführen, wenn es auf einem Prozessor ausgeführt wird.

## Claims

1. Method of notification of an operating fault of a service delivered by a domestic gateway (PAD) to which a telephone terminal (T1) is connected, said method comprising:
- a step (E1) of detecting a malfunction at the level of an automaton (M1,..., Mn, WD) of said domestic gateway (PAD), and of obtaining an error code related to said malfunction,
- a step (E3) of obtaining a voice film, using said error code,
- and a step (E5) of reading said voice film at said telephone terminal (T1), **characterized in that** the reading step being followed by a step (E6) of receiving a DTMF code, and in response to the receiving of the DTMF code,
by a step (E9) of automatically establishing a call to a telephone number selected as a function of the error code obtained.

2. Method of notification according to Claim 1, **characterized in that** said reading step (E5) is preceded by a step (E4) of dispatching a message to said telephone terminal (T1), said message being intended to cause said telephone terminal (T1) to ring.

3. Method of notification according to Claim 1 or 2, **characterized in that** said step (E1) of detecting a malfunction and of obtaining an error code being repeated for several automatons (M1,..., Mn, WD) in said domestic gateway, said step (E3) of obtaining a voice film is preceded by a step (E2) of aggregating the error codes generated by said automatons (M1,..., Mn, WD), and of obtaining a global error code indicative of said operating fault.

4. Method of notification according to Claim 3, **characterized in that** said voice film is obtained by using said global error code.

5. Domestic gateway (PAD) connected on the one hand to a telephone terminal (T1) and on the other hand to a communication network (RES1, RES2), said gateway comprising automatons for supervising software bricks (WD) and for managing (M1,..., Mn) protocol procedures between said domestic gateway (PAD) and said communication network (RES1, RES2), and said gateway comprising:
- means for detecting a malfunction in each of said automatons (M1,..., Mn, WD), comprising means for generating an error code related to said malfunction,
- means for obtaining a voice film, using at least one error code generated by said detecting means,
- and means for reading said voice film at said telephone terminal (T1),
and said gateway being **characterized in that** it comprises:
- means for receiving a DTMF code for automatically establishing, in response to the receiving of the DTMF code, a call to a telephone number selected as a function of the error code obtained.

6. Domestic gateway (PAD) according to Claim 5, **characterized in that** said detecting means generate an error code on detecting a blocking of one of the branches of said automaton for a duration greater than a predetermined threshold, or on detecting the receiving by said automaton of a message indicative of a malfunction in said communication network (RES1, RES2) .

7. Computer program comprising instructions for implementing the method according to any one of Claims 1 to 4, when it is executed on a processor.
